(19) 

Europäisches
Patentamt
European
Patent Office
Office européen
des brevets

(11) **EP 4 641 952 A1**

(12) **EUROPEAN PATENT APPLICATION**

(43) Date of publication:
**29.10.2025 Bulletin 2025/44**

(21) Application number: **24171592.9**

(22) Date of filing: **22.04.2024**

(51) International Patent Classification (IPC):
**H04B 17/10** $^{(2015.01)}$     **H04B 17/15** $^{(2015.01)}$

(52) Cooperative Patent Classification (CPC):
**H04B 17/103; H04B 17/191**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Rohde & Schwarz GmbH & Co. KG
81671 München (DE)**

(72) Inventors:
• **Bette, Fabian
81671 München (DE)**
• **Gemmer, Thomas
81671 München (DE)**
• **Bartko, Hendrik
81671 München (DE)**

(74) Representative: **Prinz & Partner mbB
Patent- und Rechtsanwälte
Rundfunkplatz 2
80335 München (DE)**

(54) **OVER-THE-AIR MEASUREMENT SYSTEM AND METHOD**

(57)    An over-the-air, OTA, measurement system (10) for testing a reconfigurable intelligent surface, RIS, is described. The OTA measurement system (10) comprises at least one signal generator module (18) being configured to generate at least one RF signal. The OTA measurement system (10) further comprises at least one RF antenna (28) that is configured to transmit the at least one RF signal. The OTA measurement system (10) further comprises a positioner unit (26) that is configured to hold an RIS module (16) in an adaptable position, wherein the positioner unit is configured to modify the adaptable position. The at least one RF antenna (28) further is configured to receive at least one reflected RF signal. The OTA measurement system (10) is configured such that far-field conditions of the at least one transmitted RF signal are provided at the RIS module (16), and that far-field conditions of the at least one reflected RF signal are provided at the at least one RF antenna (28). The OTA measurement system (10) further comprises at least one receiver module (22) being connected to the at least one RF antenna (28) so as to receive the at least one reflected RF signal from the at least one RF antenna (28). The OTA measurement system (10) further comprises a signal processing module (24), wherein the signal processing module (24) is configured to determine at least one reflection parameter based on the at least one RF signal and based on the at least one reflected RF signal. Further, an OTA measurement method is described.

**Fig. 1**

EP 4 641 952 A1

**Description**

The present invention generally relates to an over-the-air measurement system for testing a reconfigurable intelligent surface. The present invention further relates to an over-the-air measurement method of performing OTA measurements by an OTA measurement system.

A reconfigurable intelligent surface (RIS) reflects an impinging RF signal into a certain, configurable direction, thereby allowing to shape the path of travel of the RF signal. In other words, RISs allow for passive beamforming of RF signals.

RISs can be utilized in order to extend the range of wireless communication devices as well as in order to enhance the quality of data links between wireless communication devices by appropriately adapting lobes of the RF signal to a location of the respective wireless device.

In fact, RISs may be a key technology for upcoming wireless communication standards such as 6G.

Like for other devices employed in wireless communication, there is a need to test RISs with respect to their operational properties, such as their beamforming capabilities

For example, RISs are tested by a bistatic antenna over-the-air (OTA) measurement system comprising a feed antenna transmitting an RF signal to the RIS, and a probe antenna receiving a reflected RF signal from the RIS.

The object of the present invention is to provide an OTA measurement system and an OTA measurement method that are more efficient with respect to manufacturing cost and/or spatial requirements.

According to the invention, the problem is solved by an over-the-air (OTA) measurement system for testing a reconfigurable intelligent surface (RIS). The OTA measurement system comprises at least one signal generator module, wherein the at least one signal generator module is configured to generate at least one radio frequency (RF) signal. The OTA measurement system further comprises at least one RF antenna, wherein the at least one RF antenna is connected to the at least one signal generator module so as to receive the at least one RF signal, and wherein the at least one RF antenna is configured to transmit the at least one RF signal. The OTA measurement system further comprises a positioner unit that is configured to hold an RIS module in an adaptable position, wherein the positioner unit is configured to modify the adaptable position. The at least one RF antenna further is configured to receive at least one reflected RF signal, wherein the at least one reflected RF signal corresponds to the at least one RF signal reflected by the RIS module. The OTA measurement system is configured such that far-field conditions of the at least one transmitted RF signal are provided at the RIS module, and that far-field conditions of the at least one reflected RF signal are provided at the at least one RF antenna. The OTA measurement system further comprises at least one receiver module being connected to the at least one RF antenna so as to receive the at least one reflected RF signal from the at least one RF antenna. The OTA measurement system further comprises a signal processing module, wherein the signal processing module is configured to determine at least one reflection parameter based on the at least one RF signal and based on the at least one reflected RF signal.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Further, particularly in the case of the RIS module, the hardware may comprise capacitors, inductances, and/or resistors that may be reconfigurable.

The RIS module may comprise or be connected to an RIS controller that is configured to adapt capacitances, inductances, and/or resistances of individual unit cells of the RIS module such that reflectivity properties of the RIS module are modified.

The term "position" is understood to denote a location, e.g. a x, y, and z coordinate, and an orientation, e.g. in terms of Euler angles.

The present invention is based on the finding that a single RF antenna or a single antenna array functioning as both transmitter and receiver of the RF signal is sufficient in order to test the RIS module.

Based on the at least one reflection parameter determined based on the measurements conducted via the single RF antenna or the single RF antenna array, the relevant figures of merit of the RIS module can be determined based on the at least one reflection parameter in post-processing.

In other words, instead of employing at least one dedicated transmitter antenna and at least one dedicated receiver antenna, the OTA measurement system according to the present invention allows for testing RISs with a single RF antenna or a single RF antenna array functioning both as transmitter antenna and receiver antenna.

Thus, compared to the prior art, the number of RF antennas necessary for testing the RIS module is halved, thereby reducing the manufacturing costs of the OTA measurement system considerably.

Further, the spatial requirements of the OTA measurement system are reduced as well, as far-field conditions have to be provided only between one RF antenna (antenna array) and the RIS module instead of for two antennas (antenna arrays) that may be provided on opposite sides of the RIS module.

In general, the at least one reflection parameter relates to the electric signals that are supplied to the at least one RF antenna and that are received from the at least one RF antenna.

The at least one reflection parameter determined may be or comprise at least one S-parameter or any other suitable type of reflection parameter.

In a particular embodiment, the at least one reflection parameter determined may comprise an S11 parameter in magnitude, particularly measured with a vertical polarization of the RF signal, and an S22 parameter in magnitude, particularly measured with a horizontal polarization of the RF signal.

The positioner unit may be configured to modify the adaptable position such that the far-field conditions at the at least one RF antenna and at the RIS module are preserved.

According to an aspect of the present invention, the positioner unit is configured to adapt an azimuth angle, an elevation angle, and/or a height of the RIS module. By adapting the azimuth angle and/or the elevation angle, different relative orientations of the RIS module and the at least one antenna can be tested. By adapting the height, different portions of the RIS module may be tested.

Thus, one, two, or three degrees of freedom of the position of the RIS module may be adapted by the positioner unit.

However, it is also conceivable that the positioner unit may be configured to adapt all degrees of freedom of the position of the RIS module or an arbitrary subset of the degrees of freedom of the position of the RIS module.

As already mentioned above, the positioner unit may modify the azimuth angle, the elevation angle, and/or the height such that the far-field conditions at the at least one RF antenna and at the RIS module are preserved.

In an embodiment of the present invention, the signal processing module is configured to determine an OTA reflection parameter of the RIS module based on the at least one reflection parameter. In general, the OTA reflection parameter describes reflectivity properties of the RIS module, i.e. properties of the at least one reflected RF signal in dependence of the at least one transmitted RF signal.

The at least one reflection parameter and thus the OTA reflection parameter may comprise contributions from reflections in the OTA measurement system other than the wanted reflection to be measured, the wanted reflection being the reflection of the at least one RF signal from the RIS module back to the at least one RF antenna.

The signal processing module is configure to extract this wanted contribution based on the at least one reflection parameter determined.

In fact, the signal processing module may be configured to apply a time-gating algorithm in order to determine the OTA reflection parameter, particularly wherein the signal processing module is configured to apply the time-gating algorithm to the reflected RF signal in order to determine the OTA reflection parameter.

As already mentioned above, the at least one reflection parameter comprises contributions from other reflections in the OTA measurement system. By applying a suitable time gate, the wanted reflected signal can be isolated for determining the at least one reflection parameter, such that the other reflections do not impair the measurement results for the at least one reflection parameter.

For example, a window function such as a Hanning window may be applied to the reflected RF signal in order to determine the at least one reflection parameter and thus in order to determine the OTA reflection parameter.

As another example, at least one background reflection parameter may be determined without the RIS module in the positioner unit, and the at least one background reflection parameter may be subtracted from the at least one reflection parameter determined with the RIS module placed in the positioner unit, thereby compensating for the unwanted reflections.

In a further embodiment of the present invention, the positioner unit is configured to modify the adaptable position to a set of different positions consecutively, and wherein the signal processing module is configured to determine the OTA reflection parameter at the different positions, respectively, particularly at each of the different positions. Accordingly, the OTA reflection parameter and thus the reflectivity properties of the RIS module may be determined for a plurality of different relative positions, particularly for a plurality of different relative orientations, of the at least one RF antenna and the RIS module. In fact, an angular distribution of the OTA reflection parameter and thus of the reflectivity properties may be determined.

The number of different positions for which the measurements described above are performed determines a resolution with which the OTA reflection parameter is determined.

The number of different positions may be adaptable, particularly adaptable by a user of the OTA measurement system. Thus, the resolution may be adaptable.

An aspect of the present invention provides that the signal processing module is configured to determine a monostatic OTA reflection pattern of the RIS module based on the OTA reflection parameters determined at the different positions. In general, the monostatic reflection pattern describes the reflectivity properties of the RIS module receiving an RF signal from a source back to the source for a plurality of different relative positions of the RIS module and the source, particularly for a plurality of different relative orientations.

In an embodiment of the present invention, the signal processing module is configured to determine a bistatic OTA reflection pattern of the RIS module based on the determined monostatic OTA reflection pattern, particularly by applying Falconer's monostatic to bistatic equivalence theorem to the determined monostatic OTA reflection pattern. In other words, the bistatic OTA reflection pattern, which corresponds to the OTA reflection pattern measured with at least one dedicated transmission antenna and at least one dedicated receiver antenna, can be determined based on the monostatic OTA reflection pattern obtained with a single RF antenna or a single RF antenna array in post-processing by appropriately transforming the monostatic OTA reflection pattern determined. Thus, it is not necessary to provide more than one RF antenna or more than one RF antenna array in order to determine the bistatic OTA reflection pattern, thereby reducing the manufacturing costs and spatial requirements of the OTA measurement system.

In a further embodiment of the present invention, the OTA measurement system further comprises a measurement instrument, wherein the measurement instrument comprises the at least one signal generator module, the at least one receiver module, and/or the signal processing module, particularly wherein the measurement instrument is a network analyzer, a vector network analyzer, or a spectrum analyzer. However, it is to be understood that the measurement instrument may be established as any other suitable type of measurement instrument, particularly as any other type of amplitude measurement instrument.

The at least one reflection parameter may comprise phase information about the at least one RF signal and/or the at least one reflected RF signal. However, this is not mandatory.

In fact, the at least one reflection parameter may be a magnitude, i.e. the at least one reflection parameter may describe a magnitude of the at least one reflected RF signal in dependence of the at least one transmitted RF signal.

The at least one RF signal generated by the at least one signal generator module may be a continuous wave, CW, signal or a modulated signal. A frequency of the CW signal or of a carrier signal of the modulated signal may correspond to an operating frequency of the RIS module. Accordingly, the RIS module may be tested with a frequency of the at least one RF signal corresponding to the operating frequency of the RIS module.

Therein and hereinafter, the term "operating frequency of the RIS module" is understood to denote a central frequency for which the respective RIS module is configured. Typically, RISs have a rather narrow frequency bandwidth of operation around the operating frequency.

The frequency of the at least one RF signal generated may be equal to the operating frequency of the RIS module or may be within the frequency bandwidth around the operating frequency.

For example, a frequency of the CW signal or of the carrier signal may be between 1 GHz and 10 THz.

However, it is to be understood that the RIS module may have an arbitrary operating frequency, i.e. also below 1 GHz or above 10 GHz. Accordingly, the frequency of the CW signal or of the carrier signal may be below 1 GHz or above 10 THz.

An aspect of the present invention provides that the at least one RF antenna comprises only one RF antenna or only one RF antenna array. As already explained above, a single RF antenna or a single RF antenna array is sufficient for the OTA measurement system according to the present disclosure, thereby reducing the manufacturing costs and spatial requirements of the OTA measurement system compared to multi-antenna OTA measurement systems.

In an embodiment of the present invention, the at least one RF antenna comprises an RF antenna array, particularly only one RF antenna array, wherein the RF antenna array is configured as a plane wave converter, and wherein the adaptable position is located in a quiet zone of the RF antenna array. Accordingly, the far-field conditions of the at least one RF signal at the RIS module and of the at least one reflected RF signal at the RF antenna array may be synthesized by the RF antenna array being configured as a plane wave converter. This allows to place the RIS module in a region that would typically be a near-field region of the at least one RF antenna, thereby further reducing the spatial requirements of the OTA measurement system according to the present disclosure.

Therein and in the following, the term "quiet zone" is understood to denote a zone or region of space for which the at least one RF signal transmitted by the RF antenna array has defined properties. In the present example, the quiet zone refers to the zone in which far-field conditions are reliably synthesized by the RF antenna array.

An aspect of the present invention provides that the OTA measurement system further comprises at least one reflector, wherein the at least one reflector is arranged and configured such that the at least one RF signal transmitted by the at least one RF antenna is forwarded to the RIS module, wherein the at least one reflector is arranged and configured such that the at least one reflected RF signal is forwarded to the at least one RF antenna, and wherein the at least one RF antenna, the at least one reflector, and the adaptable position are arranged such that the far-field conditions at the RIS module and at the at least one RF antenna are provided. Accordingly, the far-field conditions may be obtained by the at least one reflector that effectively increases the distance between the at least one antenna and the RIS module. This allows to place the RIS module in a region that would typically be a near-field region of the at least one RF antenna, thereby further reducing the spatial requirements of the OTA measurement system according to the present disclosure.

In other words, the OTA measurement system may be configured as a compact antenna test range (CATR).

The at least one reflector may be stationary, i.e. the at least one reflector may not be turned or rotated.

Optionally, the OTA measurement system may comprise an absorber element that is provided between the at least one RF antenna and the RIS module, wherein the absorber element blocks a direct transmission path between the at least one antenna and the RIS module.

According to another aspect of the present invention, the OTA measurement system further comprises at least one Fresnel lens, wherein the at least one RF antenna, the at least one Fresnel lens, and the adaptable position are arranged such that the far-field conditions at the RIS module and at the at least one RF antenna are provided. Accordingly, the far-field conditions at the RIS module and at the at least one antenna may be provided by the at least one Fresnel lens that refracts the at least one RF signal and the at least one reflected RF signal appropriately. This allows to place the RIS module in a region that would typically be a near-field region of the at least one RF antenna, thereby further reducing the spatial requirements of the OTA measurement system according to the present disclosure.

In the variants described above, the OTA measurement system may be established as an indirect far-field system.

In an embodiment of the present invention, the adaptable position is spaced from the at least one RF antenna such that the adaptable position is located in a far-field region of the at least one RF antenna. Accordingly, the far-field conditions at the at least one RF antenna and at the RIS module may be obtained by a sufficient distance between the at least one RF antenna and the RIS module. In other words, the OTA measurement system may be established as a direct far-field system.

The OTA measurement system may further comprise an anechoic chamber, wherein the at least one RF antenna and the RIS module are arranged within the anechoic chamber. In general, the anechoic chamber reduces unwanted reflections within the OTA measurement system, and also shields the OTA measurement system from external electromagnetic waves, thereby enhancing the accuracy of the measurement results, particularly of the at least one reflection parameter determined, of the OTA reflection parameter(s) determined, of the monostatic OTA reflection pattern determined, and/or of the bistatic OTA reflection pattern determined.

According to the present invention, the problem further is solved by an over-the-air (OTA) measurement method of performing OTA measurements by an OTA measurement system, particularly by an OTA measurement system according to any one of the variants described above. The method comprises the steps of:

- setting, by a positioner unit, a relative position of an RIS module, wherein the relative position is a position of the RIS module relative to at least one RF antenna;

- generating, by a signal generator module, at least one RF signal;

- transmitting, by the at least one RF antenna, the at least one RF signal to the RIS module;

- receiving, by the at least one RF antenna, at least one reflected RF signal form the RIS module; and

- determining, by a signal processing module, at least one reflection parameter based on the at least one RF signal and based on the at least one reflected RF signal.

The OTA measurement system is configured such that far-field conditions of the at least one transmitted RF signal are provided at the RIS module, and that far-field conditions of the at least one reflected RF signal are provided at the at least one RF antenna.

Particularly, the OTA measurement system according to any one of the variants described above is configured to perform the OTA measurement method.

Regarding the further advantages and properties of the OTA measurement method, reference is made to the explanations given above with respect to the OTA measurement system, which also hold for the OTA measurement method and vice versa.

The foregoing aspects and many of the attendant advantages of the claimed subject matter will become more readily appreciated as the same become better understood by reference to the following detailed description, when taken in conjunction with the accompanying drawings, wherein:

- Figure 1 schematically shows a first variant of an OTA measurement system according to the present invention;

- Figure 2 schematically shows a second variant of an OTA measurement system according to the present invention;

- Figure 3 schematically shows a third variant of an OTA measurement system according to the present invention;

- Figure 4 schematically shows a fourth variant of an OTA measurement system according to the present invention;

- Figure 5 shows a flow chart of an OTA measurement method performed by the OTA measurement system of any one of Figures 1 to 4; and

- Figures 6 to 8 show different diagrams illustrating individual steps of the OTA measurement method of Figure 5.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

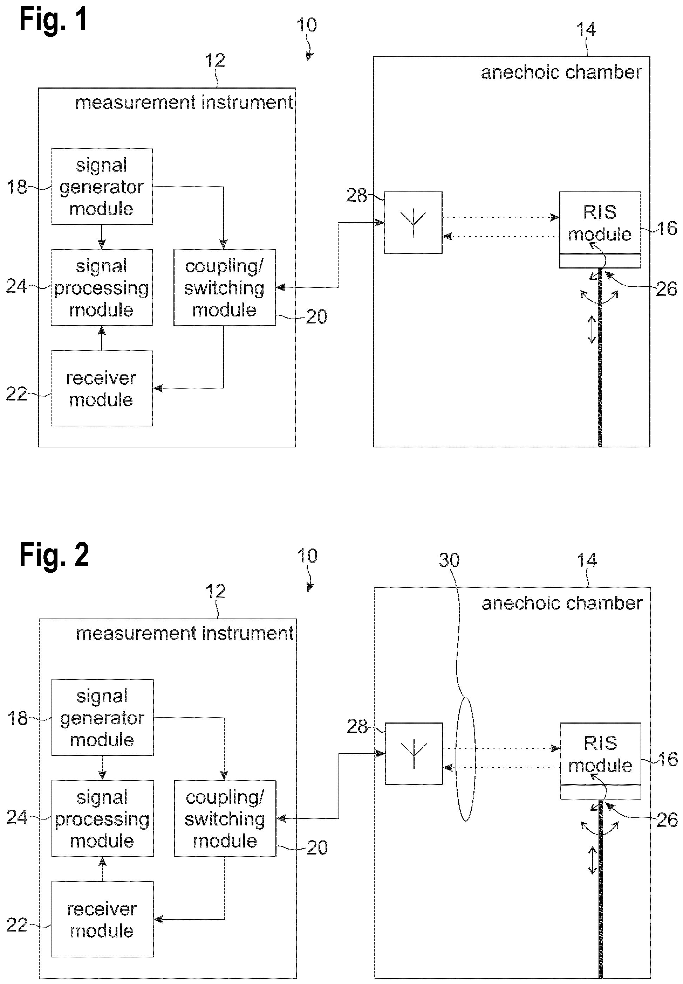

Figure 1 schematically shows an OTA measurement system 10 comprising a measurement instrument 12 and an anechoic chamber 14.

In general, the OTA measurement system 10 is configured to conduct OTA measurements on a device under test, and more specifically on an RIS module 16.

For example, the measurement instrument 12 may be a network analyzer, a vector network analyzer, or a spectrum analyzer.

However, it is to be understood that any other suitable type of measurement instrument may be used, particularly any other suitable type of amplitude measurement instrument.

The measurement instrument 12 comprises a signal generator module 18 that is configured to generate an RF signal.

For example, the RF signal generated by the signal generator module 18 may be a continuous wave signal having a frequency that corresponds to an operating frequency of the RIS module 16.

As another example, the RF signal generated by the signal generator module 18 may be a modulated signal having a carrier frequency that corresponds to the operating frequency of the RIS module 16.

The measurement instrument 12 further comprises a coupling and/or switching module 20 that is connected to the signal generator module 18 so as to receive the RF signal generated by the signal generator module 18.

The measurement instrument 12 further comprises a receiver module 22 that is connected to the coupling and/or switching module 20.

Moreover, the measurement instrument 12 comprises a signal processing module 24 that is connected to both the signal generator module 18 and the receiver module 22.

In general, the anechoic chamber 14 provides a distortion-free or at least a distortion-reduced environment for testing the RIS module 16.

In fact, the anechoic chamber 14 may comprise a housing that is configured to shield an interior of the anechoic chamber 14 from external electromagnetic waves.

Further, absorber elements may be provided in the interior of the anechoic chamber 14 that reduce unwanted reflections within the anechoic chamber 14.

For testing, the RIS module 16 is placed in a positioner unit 26 that is located within the anechoic chamber 14.

In general, the positioner unit 26 is configured to hold the RIS module 16 in an adaptable position that is suitable for testing the RIS module 16.

In fact, the positioner unit 26 is configured to modify the adaptable position.

In the exemplary embodiment shown in Figure 1, the positioner unit 26 is configured to modify an azimuth angle, an elevation angle, and a height of the RIS module 16.

However, it is to be understood that any other degrees of freedom of the adaptable position of the RIS module 16 may be modified by the positioner unit 26 additionally or instead.

The OTA measurement system 10 further comprises at least one RF antenna 28 that is provided in the anechoic chamber 14.

In the exemplary embodiment shown in Figure 1, the at least one RS antenna 28 is a single RF antenna.

In general, the RF antenna 28 is configured to transmit the RF signal generated by the signal generator module 18 to the RIS module 16, and to receive a corresponding reflected RF signal from the RIS module 16.

Therein, the RF antenna 28 is coupled to the signal generator module 18 via the coupling and/or switching module 20, which forwards the RF signal generated by the signal generator module 18 to the RF antenna 28.

Further, the RF antenna 28 is connected to the receiver module 22 via the coupling and/or switching module 20, which forwards the reflected RF signal received by the RF antenna 28 to the receiver module 22.

As described above, the positioner unit 26 is configured to hold the RIS module 16 in the adaptable position.

Therein, the adaptable position is chosen such that far-field conditions of the transmitted RF signal are obtained at the RIS module 16, and such that far-field conditions of the reflected RF signal are obtained at the RF antenna 28.

In the exemplary embodiment shown in Figure 1, the OTA measurement system 10 is established as a direct far-field system, i.e. the far field conditions are obtained by a sufficient distance between the RF antenna 28 and the RIS module 16.

Hereinafter, a plurality of exemplary embodiments of the OTA measurement system 10 being established as an indirect far-field system are described.

Figure 2 shows a further exemplary embodiment of the OTA measurement system 10, wherein only the differences compared to the first variant described above with reference to Figure 1 are explained hereinafter.

In this exemplary embodiment, a Fresnel lens 30 is provided between the RF antenna 28 and the RIS module 16.

The RF antenna 28, the Fresnel lens 30, and the RIS module 16 are arranged such that the far-field conditions at the RIS module 16 and at the RF antenna 28 are provided.

In this embodiment, the RIS module 16 may be placed in a region that would typically be a near-field region of the RF antenna 28.

However, the transmitted RF signal and the reflected RF signal are refracted by the Fresnel lens 30, thereby obtaining the far-field conditions at the RIS module 16 and at the RF antenna 28.

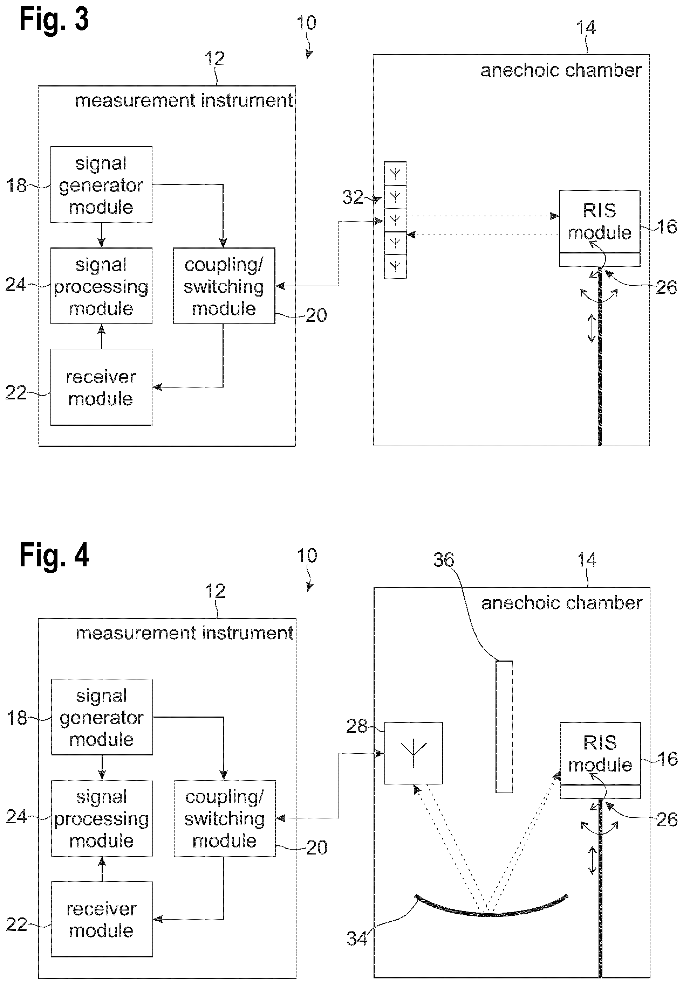

Figure 3 shows a further exemplary embodiment of the OTA measurement system 10, wherein only the differences compared to the variants described above will be explained hereinafter.

In this exemplary embodiment, a single RF antenna array 32 is provided instead of the RF antenna 28.

The RF antenna array 32 is configured as a plane wave converter, and the RIS module 16 is provided in a quiet zone of the RF antenna array 32.

The far-field conditions of the RF signal transmitted by the RF antenna array 32 at the RIS module 16 and of the reflected RF signal at the RF antenna array 32 are synthesized by the RF antenna array 32 being configured as a plane wave converter.

Accordingly, the RIS module 16 may be placed in a region that would typically be a near-field region of the RF antenna 28.

Figure 4 shows a further exemplary embodiment of the OTA measurement system 10, wherein only the differences compared to the variants described above will be explained hereinafter.

In this exemplary embodiment, the OTA measurement system 10 is established as a compact antenna test range (CATR) having a reflector 34 that is provided in the anechoic chamber 14.

The reflector 34 is arranged and configured such that the RF signal transmitted by the RF antenna 28 is forwarded to the RIS module 16, and such that the reflected RF signal is forwarded to the RF antenna 28.

The RF antenna 28, the reflector 34, and the RIS module 16 are arranged such that the far-field conditions at the RIS module 16 and at the RF antenna 28 are provided.

The reflector 34 may be stationary, i.e. the at least one reflector may not be turned or rotated.

However, it is also conceivable that the reflector 34 may be rotatable.

Optionally, the OTA measurement system 10 may comprise an absorber element 36 that is provided between the RF antenna 28 and the RIS module 16, wherein the absorber element 36 blocks a direct transmission path between the RF antenna 28 and the RIS module 16.

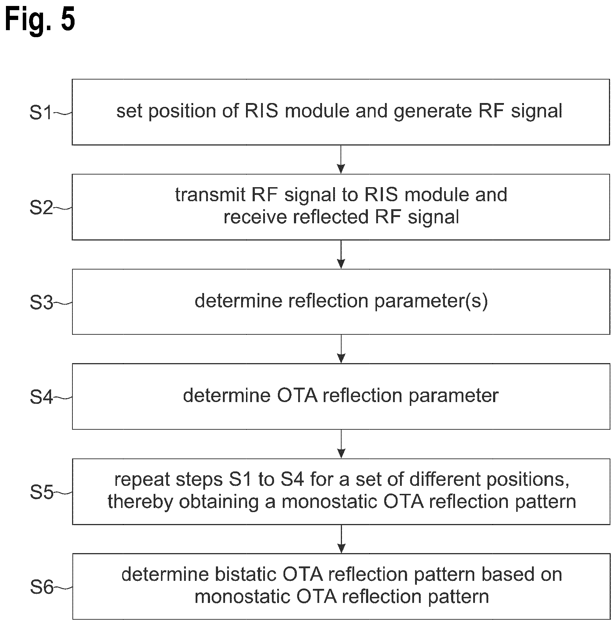

The OTA measurement system 10 according to any one of the variants described above is configured to perform an OTA measurement method that is described hereinafter with reference to Figure 5.

Hereinafter, the term "relative position" refers to a position of the RIS module 16 relative to the RF antenna 28 or relative to the RF antenna array 32.

A relative position of the RIS module 16 is set by the positioner unit 26, and an RF signal is generated by the signal generator module 18 (step S1).

The RF signal generated is forwarded to the RF antenna 28 or to the RF antenna array 32 via the coupling and/or switching module 20.

Moreover, the RF signal generated is forwarded to the signal processing module 24 as a reference signal.

The RF signal is transmitted to the RIS module 16 by the RF antenna 28 or by the RF antenna array 32, and a corresponding reflected RF signal is received by the RF antenna 28 or by the RF antenna array 32 (step S2).

The reflected RF signal is forwarded to the receiver module 22 via the coupling and/or switching module 20.

The receiver module 22 processes the reflected RF signal appropriately and forwards the reflected RF signal to the signal processing module 24.

At least one reflection parameter is determined by the signal processing module 24 based on the RF signal and based on the reflected RF signal (step S3).

Particularly, the at least one reflection parameter determined may be or comprise at least one S-parameter or any other suitable type of reflection parameter.

For example, the at least one reflection parameter determined may comprise an S11 parameter in magnitude, particularly measured with a vertical polarization of the RF signal, and an S22 parameter in magnitude, particularly measured with a horizontal polarization of the RF signal.

Without restriction of generality, the exemplary case of the at least one reflection parameter being an S-parameter is described hereinafter.

An OTA reflection parameter of the RIS module 16 is determined by the signal processing module 24 based on the at least one reflection parameter determined (step S4).

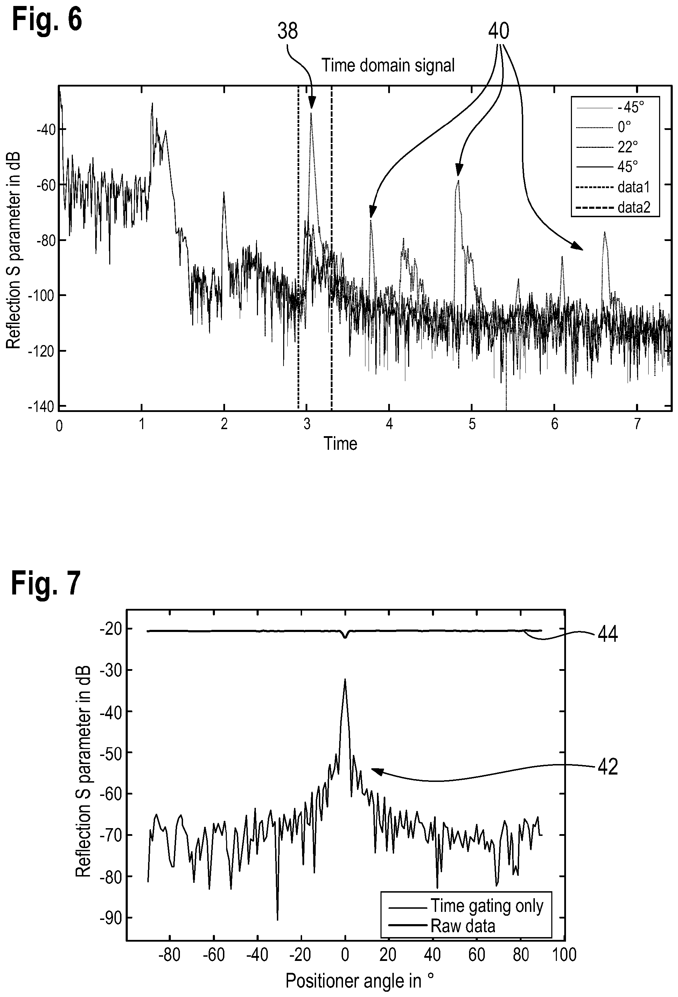

As is illustrated in Figure 6, which shows a diagram of a reflections S-parameter plotted against time, the at least one reflection parameter comprises not only contributions from the wanted reflection of the RF signal at the RIS module 16 back to the RF antenna 28 or the RF antenna array 32, which is marked by a time window 38 in Figure 6.

Instead, the at least one reflection parameter comprises further contributions 40 that, for example, occur due to reflections of the RF signal off other surfaces or due to multiple reflections within the OTA measurement system 10.

The signal processing module 24 may be configured to extract the wanted contribution to the at least one reflection parameter by applying a suitable time-gating algorithm in order to determine the OTA reflection parameter, particularly wherein the signal processing module is configured to apply the time-gating algorithm to the reflected RF signal in order to determine the OTA reflection parameter.

For example, a window function such as a Hanning window may be applied to the reflected RF signal in order to isolate the wanted reflection.

With such a time-gating algorithm applied, the absorber element 36 describe above with respect to Figure 4 is optional, as the direct reflection can be discarded due to the different travel times of the RF signal via the reflector 34 compared to the direct path between the RF antenna 28 and the RIS module 16.

Alternatively, at least one background reflection parameter may be determined without the RIS module 16 in the positioner unit 26, and the at least one background reflection parameter may be subtracted from the at least one reflection parameter determined with the RIS module 16 placed in the positioner unit 26, thereby obtaining the OTA reflection parameter.

Steps S1 to S4 describe above are repeated for a plurality of different relative positions of the RIS module 16, thereby obtaining a monostatic OTA reflection pattern of the RIS module 16 (step S5).

In other words, the positioner unit 26 modifies the adaptable position to a set of different positions consecutively, and the OTA reflection parameter is determined at the different positions, respectively.

For example, the azimuth angle and/or the elevation angle of the RIS module 16 may be adapted between the different positions.

The resulting angular distribution 42 of the OTA reflection parameter, which is illustrated in Figure 7, is the monostatic OTA reflection pattern of the RIS module 16.

The exemplary results shown in Figure 7 are obtained for a horizontal polarization at a frequency of the RF signal of 28 GHz.

However, it is to be understood that, as already mentioned above, the operating frequency of the RIS module 16 and thus the frequency of the RF signal may have any other arbitrary value.

Figure 7 further illustrates the raw measurement data 44 of the at least one reflection parameter without the time-gating algorithm or another correction being applied to the determined reflection parameters at the different positions.

A bistatic OTA reflection pattern of the RIS module 16 is determined by the signal processing module 24 based on the determined monostatic OTA reflection pattern (step S6).

More precisely, the signal processing module 24 may be configured to apply Falconer's monostatic to bistatic equivalence theorem to the determined monostatic OTA reflection pattern in order to determine the bistatic OTA reflection pattern of the RIS module 16.

Falconer's monostatic to bistatic equivalence theorem relates a bistatic cross section $\sigma_b$ to a monostatic cross section $\sigma_m$ according to

$$\sigma_b(\theta_t, \theta_r, f) \cong \sigma_m\left(\theta = \arcsin\left(\frac{\sin(\theta_t) + \sin(\theta_r)}{2}\right), f\right).$$

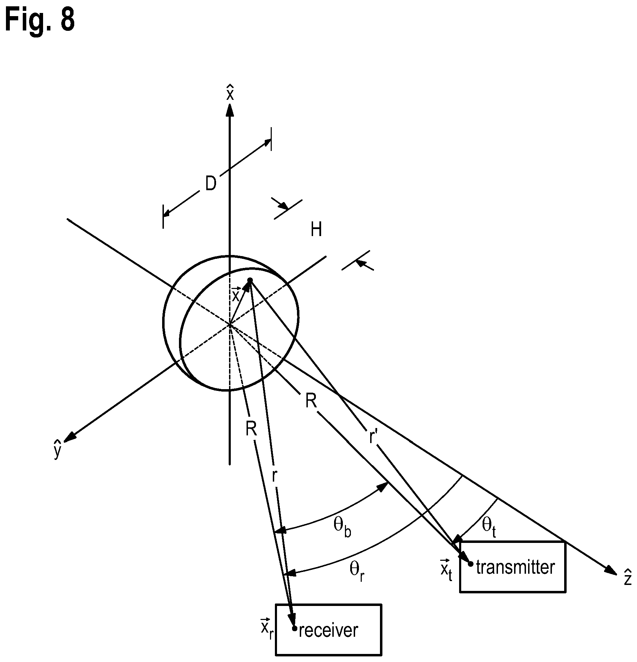

Therein, as is also illustrated in Figure 8, $\theta$ is the equivalent monostatic azimuth angle, $\theta_r$ is the bistatic receiver azimuth angle, $\theta_t$ is the bistatic transmitter azimuth angle, and f is the transmitter frequency.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1.  An over-the-air, OTA, measurement system for testing a reconfigurable intelligent surface, RIS,

    wherein the OTA measurement system (10) comprises at least one signal generator module (18), wherein the at least one signal generator module (18) is configured to generate at least one radio frequency, RF, signal,
    wherein the OTA measurement system (10) further comprises at least one RF antenna (28), wherein the at least one RF antenna (28) is connected to the at least one signal generator module (18) so as to receive the at least one RF signal, wherein the at least one RF antenna (28) is configured to transmit the at least one RF signal,
    wherein the OTA measurement system (10) further comprises a positioner unit (26) that is configured to hold an RIS module (16) in an adaptable position, wherein the positioner unit (26) is configured to modify the adaptable position,
    wherein the at least one RF antenna (28) further is configured to receive at least one reflected RF signal, wherein the at least one reflected RF signal corresponds to the at least one RF signal reflected by the RIS module (16), wherein the OTA measurement system (10) is configured such that far-field conditions of the at least one transmitted RF signal are provided at the RIS module (16), and that far-field conditions of the at least one reflected RF signal are provided at the at least one RF antenna (28),
    wherein the OTA measurement system (10) further comprises at least one receiver module (22) being connected to the at least one RF antenna (28) so as to receive the at least one reflected RF signal from the at least one RF antenna (28), and
    wherein the OTA measurement system (10) further comprises a signal processing module (24), wherein the signal processing module (24) is configured to determine at least one reflection parameter based on the at least one RF signal and based on the at least one reflected RF signal.

2.  The OTA measurement system of claim 1, wherein the positioner unit (26) is configured to adapt an azimuth angle, an elevation angle, and/or a height of the RIS module (16).

3.  The OTA measurement system according to any one of the preceding claims, wherein the signal processing module (24) is configured to determine an OTA reflection parameter of the RIS module (16) based on the at least one reflection parameter.

4.  The OTA measurement system according to claim 3, wherein the signal processing module (24) is configured to apply a time-gating algorithm in order to determine the OTA reflection parameter, particularly wherein the signal processing module is configured to apply the time-gating algorithm to the reflected RF signal in order to determine the OTA reflection parameter.

5.  The OTA measurement system according to claim 3 or 4, wherein the positioner unit (26) is configured to modify the adaptable position to a set of different positions consecutively, and wherein the signal processing module (24) is configured to determine the OTA reflection parameter at the different positions, respectively, particularly at each of the different positions.

6.  The OTA measurement system of claim 5, wherein the signal processing module (24) is configured to determine a monostatic OTA reflection pattern of the RIS module (16) based on the OTA reflection parameters determined at the different positions.

7. The OTA measurement system of claim 6, wherein the signal processing module (24) is configured to determine a bistatic OTA reflection pattern of the RIS module (16) based on the determined monostatic OTA reflection pattern, particularly by applying Falconer's monostatic to bistatic equivalence theorem to the determined monostatic OTA reflection pattern.

8. The OTA measurement system according to any one of the preceding claims, further comprising a measurement instrument (12), wherein the measurement instrument (12) comprises the at least one signal generator module (18), the at least one receiver module (22), and/or the signal processing module (24), particularly wherein the measurement instrument (12) is a network analyzer, a vector network analyzer, or a spectrum analyzer.

9. The OTA measurement system according to any one of the preceding claims, wherein the at least one RF signal generated by the at least one signal generator module (18) is a continuous wave, CW, signal or a modulated signal.

10. The OTA measurement system according to any one of the preceding claims, wherein the at least one RF antenna (28) comprises only one RF antenna (28) or only one RF antenna array (32).

11. The OTA measurement system according to any one of the preceding claims, wherein the at least one RF antenna (28) comprises an RF antenna array (32), particularly only one RF antenna array (32), wherein the RF antenna array (32) is configured as a plane wave converter, and wherein the adaptable position is located in a quiet zone of the RF antenna array (32).

12. The OTA measurement system according to any one of the preceding claims, further comprising at least one reflector (34), wherein the at least one reflector (34) is arranged and configured such that the at least one RF signal transmitted by the at least one RF antenna (28) is forwarded to the RIS module (16), wherein the at least one reflector (34) is arranged and configured such that the at least one reflected RF signal is forwarded to the at least one RF antenna (28), and wherein the at least one RF antenna (28), the at least one reflector (34), and the adaptable position are arranged such that the far-field conditions at the RIS module (16) and at the at least one RF antenna (28) are provided.

13. The OTA measurement system according to any one of the preceding claims, further comprising at least one Fresnel lens (30), wherein the at least one RF antenna (28), the at least one Fresnel lens (30), and the adaptable position are arranged such that the far-field conditions at the RIS module (16) and at the at least one RF antenna (28) are provided.

14. The OTA measurement system according to any one of claims 1 to 10, wherein the adaptable position is spaced from the at least one RF antenna (28) such that the adaptable position is located in a far-field region of the at least one RF antenna (28).

15. An over-the-air (OTA) measurement method of performing OTA measurements by an OTA measurement system (10), particularly by an OTA measurement system (10) according to any one of the preceding claims, the method comprising the steps of

- setting, by a positioner unit (26), a relative position of an RIS module (16), wherein the relative position is a position of the RIS module (16) relative to at least one RF antenna (28);
- generating, by a signal generator module (18), at least one RF signal;
- transmitting, by the at least one RF antenna (28), the at least one RF signal to the RIS module (16);
- receiving, by the at least one RF antenna (28), at least one reflected RF signal form the RIS module (16); and
- determining, by a signal processing module (24), at least one reflection parameter based on the at least one RF signal and based on the at least one reflected RF signal,

wherein the OTA measurement system (10) is configured such that far-field conditions of the at least one transmitted RF signal are provided at the RIS module (16), and that far-field conditions of the at least one reflected RF signal are provided at the at least one RF antenna (28).

**Fig. 1**

**Fig. 2**

## Fig. 3

measurement instrument 12

10

anechoic chamber 14

18 — signal generator module

24 — signal processing module

20 — coupling/ switching module

22 — receiver module

32

RIS module 16

26

## Fig. 4

measurement instrument 12

10

36

anechoic chamber 14

18 — signal generator module

24 — signal processing module

20 — coupling/ switching module

22 — receiver module

28

RIS module 16

26

34

# Fig. 5

S1 — | set position of RIS module and generate RF signal |

S2 — | transmit RF signal to RIS module and
receive reflected RF signal |

S3 — | determine reflection parameter(s) |

S4 — | determine OTA reflection parameter |

S5 — | repeat steps S1 to S4 for a set of different positions,
thereby obtaining a monostatic OTA reflection pattern |

S6 — | determine bistatic OTA reflection pattern based on
monostatic OTA reflection pattern |

## Fig. 6

## Fig. 7

Fig. 8

| | Europäisches Patentamt |
|---|---|
| | European Patent Office |
| | Office européen des brevets |

**EUROPEAN SEARCH REPORT**

**Application Number**

EP 24 17 1592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI YIFA ET AL: "An Automated Over-the-Air Radiated Testing Platform for Reconfigurable Intelligent Surface", 2024 18TH EUROPEAN CONFERENCE ON ANTENNAS AND PROPAGATION (EUCAP), EUROPEAN ASSOCIATION OF ANTENNAS AND PROPAGATION, 17 March 2024 (2024-03-17), pages 1-5, XP034594252, DOI: 10.23919/EUCAP60739.2024.10501131 [retrieved on 2024-04-26] | 1-3,5,6, 8-15 | INV. H04B17/10 H04B17/15 |
| Y | * the whole document * * figures 1,2 * | 4-7 | |
| Y | HASHIGUCHI HIROSHI ET AL: "Prediction Method for Incident Angle Characteristics of Bistatic RCS of Reflectarray", 2023 IEEE INTERNATIONAL SYMPOSIUM ON ANTENNAS AND PROPAGATION AND USNC-URSI RADIO SCIENCE MEETING (USNC-URSI), IEEE, 23 July 2023 (2023-07-23), pages 1125-1126, XP034420195, DOI: 10.1109/USNC-URSI52151.2023.10238056 [retrieved on 2023-09-07] * abstract * * page 1125 - page 1126 * * figure 1 * * Reference 2 * | 4-7 | |

-----

-----

-/--

**TECHNICAL FIELDS SEARCHED (IPC)**

H04B

The present search report has been drawn up for all claims

| Place of search | Date of completion of the search | Examiner |
|---|---|---|
| The Hague | 20 September 2024 | Reville, Lenora |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 17 1592

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROHDE & SCHWARZ: "RIS regulatory aspects according to RED", ETSI DRAFT; RIS(22)004004R1, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG RIS Reconfigurable Intelligent Surfaces 6 April 2022 (2022-04-06), pages 1-4, XP014425394, Retrieved from the Internet: URL:ftp://docbox.etsi.org/ISG/RIS/05-CONTR IBUTIONS/2022/RIS(22)004004r1_RIS_regulato ry_aspects_according_to_RED.docx [retrieved on 2022-04-06] * page 3 - page 4 * | 1-15 | |
| A | CHRISTOPHER J BRADLEY ET AL: "Evaluation of a Near-Field Monostatic-to-Bistatic Equivalence Theorem", IEEE TRANSACTIONS ON GEOSCIENCE AND REMOTE SENSING, IEEE, USA, vol. 46, no. 2, 1 February 2008 (2008-02-01), pages 449-457, XP011199463, ISSN: 0196-2892, DOI: 10.1109/TGRS.2007.909107 * the whole document * * figure 1 * | 1-15 | TECHNICAL FIELDS SEARCHED (IPC) |

The present search report has been drawn up for all claims

| Place of search | Date of completion of the search | Examiner |
|---|---|---|
| The Hague | 20 September 2024 | Reville, Lenora |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................................................

& : member of the same patent family, corresponding
   document

EPO FORM 1503 03.82 (P04C01)